# EUROPÄISCHE PATENTSCHRIFT

(11) **EP 1 231 139 B1**
(45) Veröffentlichungstag und Bekanntmachung des Hinweises auf die Patenterteilung: **08.12.2004**
(21) Anmeldenummer: 01124198.1
(22) Anmeldetag: 11.10.2001
(51) Int. Cl.: B64G 7/00, B64D 47/00

(54) **Vorrichtung zur Simulation variabler Gravitationsbeschleunigungen**
Device for the simulation of variable gravity accelerations
Dispositif de simulation d'accélérations gravitatoires variables

(30) Priorität: 13.02.2001 DE 10106516
(43) Veröffentlichungstag der Anmeldung: 14.08.2002
(73) Patentinhaber: EADS Space Transportation GmbH, 28199 Bremen (DE)
(72) Erfinder: Ransom, Stephen, 28816 Stuhr (DE); Zier, Manfred, Dr., 27721 Ritterhude (DE)
(74) Vertreter: Hansmann, Dierk, Dipl.-Ing.

(56) Entgegenhaltungen:
- US-A- 5 707 026
- US-A- 5 971 319
- "AIRPLANE-ACCELERATION DISPLAY FOR LOW-GRAVITY RESEARCH" NTIS TECH NOTES, US DEPARTMENT OF COMMERCE. SPRINGFIELD, VA, US, 1. Dezember 1989 (1989-12-01), Seite 1098 XP000096377 ISSN: 0889-8464
- PLETSER V: "MICROGRAVITY RESEARCH DURING ARICRAFT PARABOLIC FLIGHTS: THE 20 ESACAMPAIGNS" ESA BULLETIN, ESA SCIENTIFIC AND PUBLICATIONS BRANCH. NOORDWIJK, NL, Nr. 82, 1. Mai 1995 (1995-05-01), Seiten 57-68, XP000512049 ISSN: 0376-4265

## Beschreibung

Die Erfindung betrifft eine vorrichtung zur Simulation variabler Beschleunigungen zwischen 0 und 1 g, insbesondere zur Simulation der Gravitationsbedingungen auf der Marsoberfläche, bestehend aus einem eine Parabelbahn fliegenden Transportflugzeug.

Für den Test und die Erprobung von Geräten und Ausrüstungen, die auf der Oberfläche des Planeten Mars im Rahmen von unbemannten oder bemannten Missionen eingesetzt werden sollen, ist es erforderlich, die dort herrschenden Umgebungsbedingungen möglichst vollständig auf der Erde zu simulieren. Während dies für die Simulation der atmosphärischen Umgebungsbedingungen und der Oberfläche des Mars in geeigneten Testkammern relativ leicht möglich ist, stellt die Simulation der geringen Schwerebeschleunigung von nur etwa 3,72 m/s² , also etwa 1/3 g, auf der Marsoberfläche ein Problem dar.

Es sind bereits eine Reihe von Verfahren zur Simulation von Beschleunigungen, die von der Standardbeschleunigung auf der Erdoberfläche, g= 9,81 m/s² , abweichen, bekannt. Hierzu gehört, insbesondere für die Erzeugung größerer Beschleunigungen von beliebiger Dauer, die Verwendung von Zentrifugen. Diese können jedoch Beschleunigungen von weniger als 1 g nicht realisieren und sind deshalb für den beschriebenen Anwendungsfall prinzipiell nicht geeignet.

Darüber hinaus ist für die Simulation von Beschleunigungen zwischen 0 und 1 g die Verwendung von Falltürmen bekannt, in denen die Bedingungen der Schwerelosigkeit bzw. verminderter Schwerkraft für eine Dauer von etwa 5 Sekunden erzeugt werden können. Solche Falltürme können eine Restschwere von beispielsweise 1/3 g dadurch realisieren, daß eine eingesetzte Versuchskapsel während ihres Falls entsprechend einer Beschleunigung von 2/3 g abgebremst wird. Dieses Abbremsen kann entweder aktiv erfolgen oder aber passiv durch ein Gegengewicht mittels einer Rolle und eines Seiles. Die unter einer Beschleunigung von 1/3 g möglichen Fallzeiten liegen dann bei etwa 5,5 Sekunden für eine Fallstrecke von 100 Metern. Falltürme erzeugen jedoch im allgemeinen am Ende der Fallzeit eine harte Bremsphase mit einem erheblichen Bremsschock, der auf die Kapsel einwirkt und der insbesondere darin befindliche Testpersonen gefährden würde.

Eine weitere Möglichkeit zur Erzeugung von Beschleunigungen zwischen 0 und 1 g besteht in der Verwendung sogenannter atmosphärischer Fallkapseln, die aus großer Höhe abgeworfen werden und bei denen in der Regel eine aktive Einrichtung zur Kompensation des atmosphärischen Widerstandes benutzt wird. Es ist theoretisch denkbar, derartige Fallkapseln mit einem aktiven Bremssystem derart auszurüsten, daß sie entsprechend einer Beschleunigung von 2/3 g zur Erde fallen. Ein solches Bremssystem müßte allerdings noch entwickelt werden. Bei einem Abwurf aus 8000 Metern Höhe ließe sich dann für eine Dauer von etwa 40 Sekunden die gewünschte Beschleunigung von 1/3 g erzielen. Bemannte atmosphärische Fallkapseln sind allerdings bisher nicht bekannt geworden; ihre Realisierung wäre wegen der einzuhaltenden Sicherheitsanforderungen zudem extrem aufwendig.

Schließlich stellen Parabelflüge mit entsprechend ausgerüsteten Flugzeugen eine bereits bekannte Möglichkeit zur Erzielung von Schwerelosigkeit, sogenannten 0-g Bedingungen, für eine Dauer von etwa 25 Sekunden dar. Die Flugzeuge fliegen dabei auf einer sogenannten Wurfparabelbahn, d.h. derjenigen Bahn, auf der sich ein geworfener antriebsloser Gegenstand bei nicht vorhandenem Luftwiderstand bewegen würde.

Aus der Veröffentlichung "Airplane-Acceleration" Display for Low-Gravity Research" NTS TECH NOTES, US Department of Commerce, Springfield, VA, US, 1. Dezember 1989, Seite 1098, ist eine Beschleunigungsanzeige bekannt, die die Einhaltung verschiedener Flugbahnen ermöglicht, wobei diese Flugbahnen verschiedene Gravitationsbedingungen darstellen. Bei diesen Flugbahnen können es sich nur um Parabelflüge handeln. Dabei kann nicht nur 0 g simuliert werden kann, d.h. die Flugbahn muß nicht nur äquivalent zu einer Fallbeschleunigung sein, die der Erdbeschleunigung entspricht, sie kann auch derart gestaltet werden, daß eine niedrigere Graviationskraft simuliert wird. Hierbei wird die Simulation der Gravitationsbedingungen auf der Marsoberfläche (1/3 g) aufgezeigt, wofür eine Parabelbahn geflogen werden muß, die einer Fallbeschleunigung von 2/3 g entspricht.

Aufgabe der Erfindung ist es, eine Vorrichtung derart auszubilden, daß es eine möglichst einfache und effektive Simulation der Bedingungen auf der Marsoberfläche ermöglicht.

Die Erfindung löst die Aufgabe durch eine Vorrichtung mit den kennzeichnenden Merkmalen des Patentanspruchs 1.

Die erfindungsgemäß vorgesehene gelenkige Aufhängung der Testkammer sorgt dabei dafür, daß die Restschwere in der Testkammer stets in Richtung Erdmittelpunkt zeigt, unabhängig von der aktuellen Fluglage des Flugzeuges während seines Parabelfluges.

Weiterhin wird vorgeschlagen, daß die Testkammer eine kardanische Aufhängung aufweist.

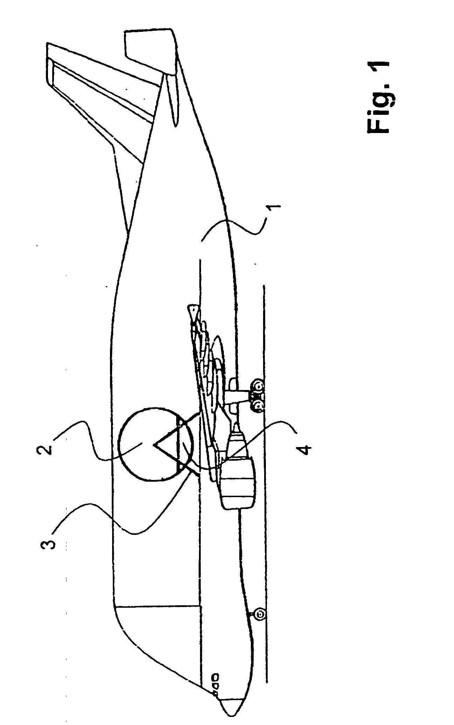

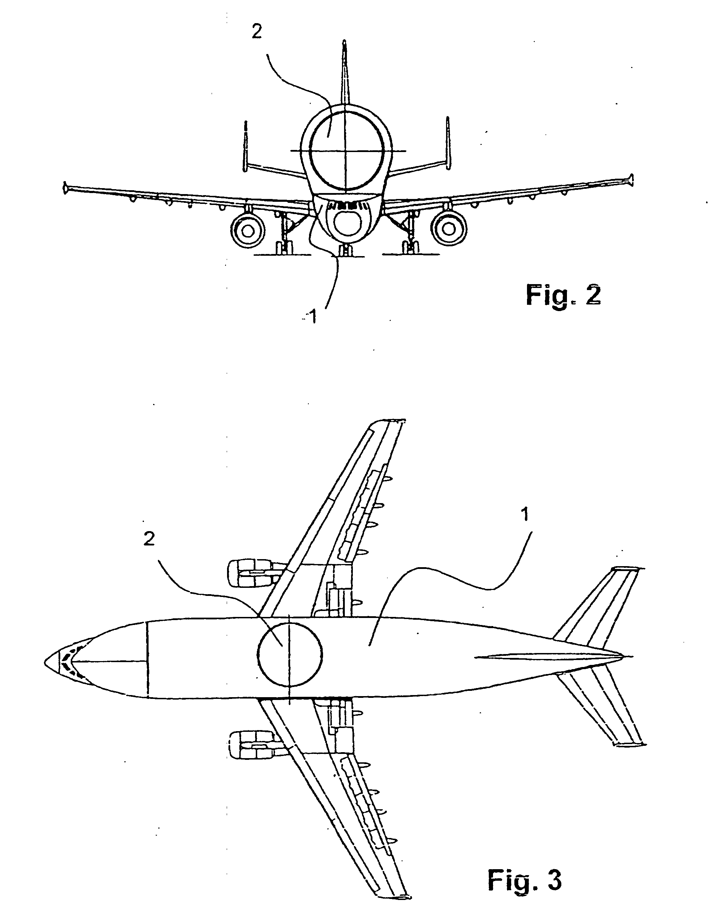

Nachfolgend soll die Erfindung anhand eines in der Zeichnung dargestellten Ausführungsbeispiels näher erläutert werden. Es zeigen
- Fig. 1 bis 3: ein Flugzeug zur Durchführung von Erprobungsflügen unter auf dem Mars herrschenden Bedingungen in drei verschiedenen Ansichten in teilweise geschnittener Darstellung und
- Fig. 4: den Bahnverlauf eines Fluges unter den Bedingungen verminderter Schwerkraft.

In einem Großraum-Transportflugzeug 1 ist eine Testkammer 2 in Form einer Kugel von etwa drei bis vier Metern Durchmesser eingebaut. Es können selbstverständlich auch andere Testkammergeometrien gewählt werden. In dieser Kammer 2 läßt sich bezüglich der Zusammensetzung der Atmosphäre, der Temperatur, des Druckes und der Oberflächenbeschaffenheit die Marsumgebung realitätsgetreu simulieren. Die Kammer 2 ist in einer Halterung 3 um wenigstens eine Achse frei drehbar aufgehängt. Im Fall des hier dargestellten Ausführungsbeispiels ist eine einfache Aufhängung mit nur einer Achse als Freiheitsgrad vorgesehen. Diese Achse entspricht zugleich der Flugzeugquerachse, so daß auf diese Weise die im Flug auftretende veränderliche Neigung der Flugzeuglängsachse gegen die Richtung der Erdanziehung kompensiert werden kann. Im Rahmen der Erfindung ist es aber selbstverständlich auch möglich, eine kardanische Aufhängung vorzusehen, um zuverlässig auch das Auftreten von störenden Querbeschleunigungen ausschließen zu können.

Der Schwerpunkt der Kammer 2 liegt unterhalb dieser Drehachse, so daß sie sich während des Fluges in der Restschwere von 1 /3 g stets in gleicher Richtung zum Erdmittelpunkt ausrichten kann. Dies wird dadurch erreicht, daß im Boden 4 der Kammer 2 die erforderlichen Subsysteme wie Kühlung, Heizung, Datenerfassung und -übertragung nach außen eingebaut sind.

Die Kammer 2 ist ferner mit einer Schleuse versehen, durch die Geräte und gegebenenfalls mit Druckanzügen ausgerüstete Testpersonen hinein- und herausgebracht werden können.

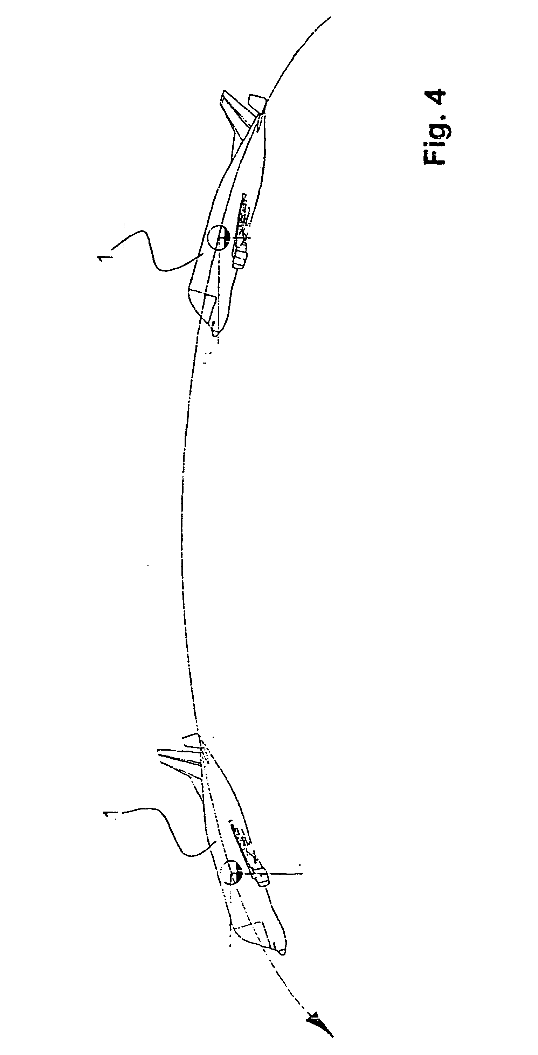

Sobald das Flugzeug 1 und die Testkammer 2 vorbereitet sind, startet das Flugzeug 1 und fliegt bis auf die für die Flugmission vorgesehen nominale Ausgangshöhe. Anschließend beginnt es einen beschleunigten Abstieg, um die erforderliche Geschwindigkeit zu erreichen. Ist diese gewünschte Geschwindigkeit erreicht, so wird mit der zu 1 /3 g gehörenden Parabelflugbahn begonnen. Hierzu wird das Flugzeug 1 zunächst, wie im rechten Teil von Fig. 4 dargestellt, in eine aufsteigende Bahn gebracht, und zwar derart, daß für die nachfolgende Flugphase die Horizontalgeschwindigkeit konstant gehalten wird und die Vertikalgeschwindigkeit sich von positiv/aufwärts ständig verringert, bis sie am Ende der Parabelflugbahn negativ/abwärts gerichtet ist. Am Anfang und am Ende der Parabelbahn ist der Betrag der Vertikalgeschwindigkeit identisch, lediglich das Vorzeichen hat gewechselt.

Die Verringerung der Vertikalgeschwindigkeit wird dadurch erreicht, daß während des gesamten Parabelfluges der vertikal gerichtete Auftrieb bei einem Drittel des Flugzeuggewichtes gehalten wird. Dieses entspricht dann exakt der zu erzielenden Restbeschleunigung von 1/3 g für die Testkammer 2.

Am Ende der Parabelflugbahn wird das Flugzeug 1 aus dem Abwärtsflug abgefangen. Anschließend kann mit einer neuen Sequenz begonnen werden oder das Flugzeug 1 kehrt zur Erde zurück.

## Patentansprüche

1. Vorrichtung zur Simulation variabler Beschleunigungen zwischen 0 und 1 g, insbesondere zur Simulation der Gravitationsbedingungen auf der Marsoberfläche, bestehend aus einem eine Parabelbahn fliegenden Transportflugzeug, **dadurch gekennzeichnet**, da**ß** in einem Laderaum des Transportflugzeuges (1) eine Testkammer (2) derart beweglich gehaltert wird, daß ihr Schwerpunkt selbsttätig in Richtung der wirkenden Restbeschleunigung einstellbar ist.

2. Vorrichtung nach Anspruch 1, **dadurch gekennzeichnet**, da**ß** die Testkammer (2) eine kardanische Aufhängung (3) aufweist.

## Claims

1. Device for simulating variable accelerations between 0 and 1 g, in particular for simulating the gravity conditions on the surface of Mars, consisting of a transport plane flying a parabolic trajectory, **characterized in that** a test chamber (2) is supported movably in a cargo hold of the transport plane (1) such that its centre of gravity can be set automatically in the direction of the acting residual acceleration.

2. Device according to claim 1, **characterized in that** the test chamber (2) has cardanic suspension (3).

## Revendications

1. Dispositif de simulation d'accélérations variables comprises dans une plage allant de 0 à 1 g, plus particulièrement pour la simulation des conditions de gravitation à la surface de Mars, comprenant un avion de transport qui vole suivant une trajectoire parabolique, **caractérisé par le fait que** dans un espace de chargement de l'avion de transport (1) une enceinte d'essais (2) est fixée avec possibilité de mouvement, d'une manière telle que son centre de gravité puisse se régler automatiquement dans la direction de l'accélération résiduelle active.

2. Dispositif selon la revendication 1, **caractérisé par le fait que** l'enceinte d'essais (2) comporte une suspension du type à joints de cardan.
